# EUROPEAN PATENT SPECIFICATION

(11) **EP 4 421 373 B1**
(45) Date of publication and mention of the grant of the patent: **18.06.2025**
(21) Application number: 24158524.9
(22) Date of filing: 20.02.2024
(51) Int. Cl.: F16M 11/10, F16L 3/015, F16M 11/20, F16M 13/02, F24F 13/02

(54) **A SUPPORT ARRANGEMENT PREFERABLY FOR A VENTILATION SYSTEM**
TRÄGERANORDNUNG, VORZUGSWEISE FÜR EIN BELÜFTUNGSSYSTEM
AGENCEMENT DE SUPPORT DE PRÉFÉRENCE POUR UN SYSTÈME DE VENTILATION

(30) Priority: 24.02.2023 DK PA202370102
(43) Date of publication of application: 28.08.2024
(73) Proprietor: Geovent A/S, 8831 Løgstrup (DK)
(72) Inventor: Christensen, Dan Svarre, 8800 Viborg (DK)
(74) Representative: Patrade A/S

(56) References cited:
- EP-A2- 0 621 227
- WO-A1-2008/140361
- WO-A1-2011/115558
- WO-A1-2016/077743
- US-A- 5 170 975

## Description

### Field of the Invention

The present invention relates to a support arrangement, preferably for a ventilation system comprising an air channel which is supported by the support arrangement, which support arrangement comprises:
- a arm construction comprising two arm sections, a first arm section and a second arm section arranged in extension of each other,
- a first joint connecting said two arm sections, wherein said first joint comprises a first joint part attached at the first arm section and a second joint part attached at the second arm section, where said joint parts are connected with each other through a shaft passing through the first and second joint part, and wherein the first and second joint part can be rotated relative to each other around an axis of rotation formed by said shaft,
- a second joint connecting said support arrangement with a fixed support, which second joint holds and maintains a basic position of the support arrangement so that different positioning of the support arrangement is possible,
- a balance arrangement comprising a tension construction having a first and a second end,
   and wherein
- each arm section comprises a hollow profile and wherein the first and second joint parts of said first joint are mounted in said hollow profiles.

### Background of the Invention

Such support arrangement may be used for a ventilation system. A flexible air channel will be held and supported by the support arrangement. Furthermore, the support arrangement will control the air channel, which is typically used for withdrawal of hazardous substances and gases. A negative pressure creates a suction acting on the air in the flexible channel and suction head which may be attached to the flexible channel to ensure that the ventilation system works in the manner desired. It is well-known that these ventilation systems are relatively heavy constructions and accordingly prior art systems are manufactured from aluminum in order to save weight.

Even when the prior art systems are made in a light version from aluminum, still a problem occurs to hold and control the air channel and to make it easy to transport, assemble and maneuver.

**In** order to solve this problem, a support arrangement of the type mentioned above is disclosed in WO2011/115558 A1.

This prior art system solves the problem by providing a support arrangement made from aluminum and which has a balance arrangement between the first and second arm sections and comprising a tension construction having a first and a second end and attachment means for attaching each of the first and second end to the two arm sections.

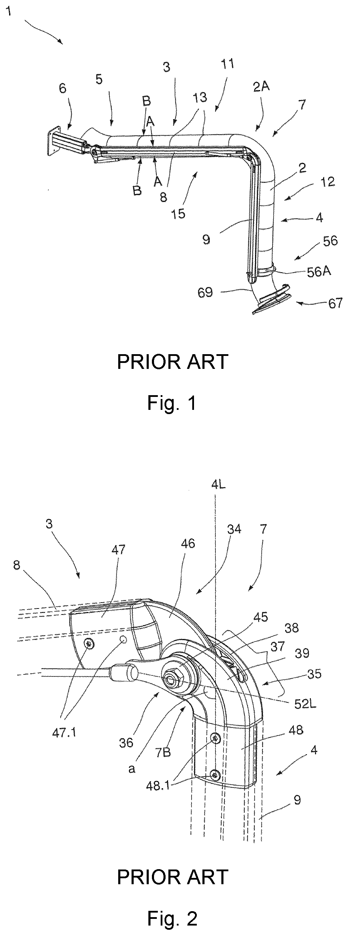

**In** Figs. 1-3, this prior art arrangement is disclosed. The arrangement is explained in the following way.

Fig. 1 illustrates an arrangement 1 intended to be used in a ventilation arrangement in order to hold and control an air channel 2. The air channel 2 is intended for the extraction of air and at least one of undesired particles and gases from various places, normally working areas of various types. The air channel 2 is connected to a unit, not shown in the drawings, that creates negative pressure in the flexible channel 2, a force that withdraws air.

The arrangement 1 comprises one single arm construction, which is arranged along the outer surface of the air channel 2A.

The prior art arm construction is shown in Figure 1 and comprises two arm sections 3 and 4, two linkage arms, a first arm section 3 and a second arm section 4, arranged one after the other. The arm construction further comprises a first joint 5, a friction joint, that unites the first arm section with a fixture arrangement 6 that holds and sets the basic position of the arm construction and that makes different positioning, bending and stretching, of the arm construction possible. The arm construction further comprises a second joint 7, a friction joint, that unites the first arm section 3 with the second arm section 4 and that makes different positioning, bending and stretching, of the arm construction possible.

Each arm section 3 and 4 comprises an aluminum profile 8 and 9 that is extended and should appropriately be manufactured by extrusion. Each arm section 3 and 4 is mainly constituted by the aluminum profiles 8 and 9 in the central part that gives the arm section its longitudinal extension.

The arrangement 1 will be light in its construction, and this means that it is easy to displace it during transport, during assembly and during use, and thus also when displacing the arrangement 1 and an air channel 2 together, since the arrangement 1 comprises only a single arm construction with arm sections 3 and 4 that comprise an aluminum profile 8 and 9. The use of aluminum makes the construction lighter than arrangements with arm sections of steel.

The use of aluminum also makes it possible to make the arrangement 1, the arm construction more gracile and more attractive than arrangements of steel.

The parts made from aluminum can be made smaller while remaining stable.

The fact that the arm construction is lighter, smaller and more attractive makes it possible to arrange the arm construction fully visible on the outer surface of the air channel 2A. This makes manufacture, transport and assembly easier, since components can be manufactured and delivered separately to be assembled on site. The use and the adaptation of the arm construction is also made easier, since an air channel 2 that is suitable for the purpose can be used. It becomes possible to use the same arm construction 1 in different contexts simply by exchanging the air channel 2.

It becomes easier also to adjust and repair the arm construction when it is not concealed inside an air channel. It is possible also to see and interpret the arm construction based on its function such that it becomes easier to use the arrangement 1.

The air channel 2 is flexible, it can be bent, at least at those parts that are coincident in location with the joints 5 and 7. The air channel 2 may be constituted by or it may comprise a tube or more rigid parts.

The aluminum profile 8 or 9 of each arm section is a hollow profile.

Each arm section 3 and 4 comprises a side 11 and 12, respectively, an outer surface that faces the air channel 2 and which has an exterior that is formed to support the air channel 2 that lies exterior to the arm construction.

It is appropriate for the air channel 2 to be principally circular, and one side 11, 12, of each arm section to have an exterior concave design that corresponds to the outer form of the channel in order to give maximum support to the air channel.

An air intake arrangement in form of a hood 67 whose position can be adjusted is united with an arm arrangement 56 which is attached at the outermost arm section 4 which comprises a baffle construction 57. The hood 67 is united with the arm arrangement 56 through a construction having a second air channel 69 that also is fixed to the arm arrangement 56 and in the hood 67, and where the construction makes it possible to adjust the position, the angle, the tilt and the direction of the hood 67 relative to the arm arrangement 56.

The arm arrangement 56 comprises also a part 56A, a handle, that can be gripped by one hand and that can transfer a force from a person to the arrangement 1 such that the position of the arrangement 1, the arm construction and the air channel 2 can be adjusted.

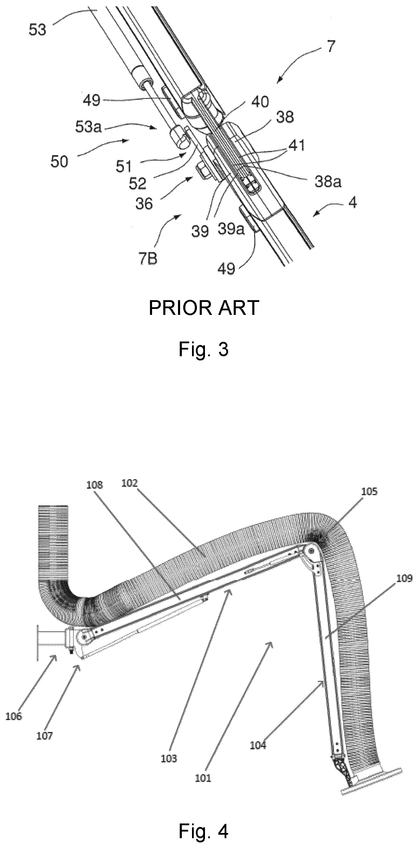

Fig. 2 and 3 are partial views of the second joint 7 of the arrangement 1.

The second joint 7 of the arrangement of the arm construction, which is a friction joint, comprises a first part 34 united with the first arm section 3 and a second part 35 united with the second arm section 4. The parts 34 and 35 of the joint are united with each other through a shaft 36 that passes through the first part of the joint 34 and the second part of the joint 35, around which shaft the first part of the joint 34 and the second part of the joint 35 can be rotated relative to each other.

Fig. 2 and 3 illustrate a balance arrangement 50 that is arranged between the second joint 7 and the first arm section 3 and comprising a fixture means 51, a fixture disk, arranged around the axis 36 of rotation of the joint fixed attached to the outer surface of the joint and comprising a part 52 that protrudes from the joint 7 and a tension construction 53, a gas spring that is attached at one end 53a in a manner that allows rotation relative to the protruding part 52, its outer free part, and that is attached at its second end to the first arm section 3 in a manner that allows rotation relative to the first arm section 3.

The central line 52L of the protruding part has an angle a, which lies within the interval 75°- 105°, relative to a central line 4L of the arm section 4, the second arm section, that is fixed attached with the part of the joint 35, the second part of the second joint, to which the fixture means 51 is fixed attached. The interval of angles 80°-100° further ensures a better, more stable function of the balance arrangement 50.

The fixture means 51 comprises a through hole through which the shaft 36 is to be placed and it has also a pre-determined form that is brought into interaction with a part outwardly directed from the joint 7 arranged around the shaft 36, with a form that corresponds to the form of the hole, such that the position of the fixture means 51 is determined relative to the joint 7. The hole and the outwardly directed part may have an interacting X-form such that the location of the fixture means, the fixture disk, can be changed by the release of the attachment means 51 from the outwardly directed part, rotation of the fixture means 51 relative to the outwardly directed part, and a new interaction of the fixture means 51 and the outwardly directed part is provided.

More explanation to the arrangement illustrated Figs. 1, 2 and 3 may be found in WO2011/115558 A1.

The protruding part 52 of the balance arrangement 50 is important as the angle in the interval 80°-100° ensures a better, more stable function of the balance arrangement 50 and makes it easy to manoeuvre the ventilation system supported by the support arrangement.

Even though the prior art support arrangement gives advantage over earlier support arrangements is has shown that the way the angle is obtained by providing the protruding part being a part of one of the joint parts of the joint makes the joint complicated compared to a joint made from a first and a second joint part being connected via a shaft.

Even though the solution disclosed in WO2011/115558 A1 has been on the marked for more than 10 years, a technically simpler construction has not been proposed until the present invention.

### Object of the Invention

It is the object of the present invention to provide a technically simple construction of a support arrangement, which has the same advantage of being able to hold and control an air channel and to make it easy to transport, assemble and maneuver.

Especially it is the purpose of obtaining the same advantages provides by the prior art system disclosed in WO2011/115558 A1, however with a technically simpler construction of the joint connection the two arm sections of the support arrangement.

### Description of the Invention

This object is obtained with a support arrangement mentioned by way of introduction, and which is defined in the preamble of claim 1 and which is peculiar in
- that the balance arrangement is arranged between the first and second arm sections,
- that the tension construction has a first and a second attachment means for attaching the first and second end of the tension construction directly to the two arm sections, and
- that the first arm section comprises a protruding part which is arranged in a plane perpendicular to the axis of rotation and which protruding part protrudes from said first arm section to a position outside a joint region between the two arm sections where the first joint is arranged,
- that a first fixture means is arranged at the protruding part, which first fixture means cooperate with the attachment means at the first end of the tension construction,
- that the second arm section comprises a second fixture means cooperating with the second attachment means at the second end of the tension construction, and
- that the first and second fixture means allow a relative rotation of the arm sections in an angle in an interval between 25° and 180° as measured between a longitudinal axis of the two arm sections.

With a support arrangement described in this way, the two arm constructions are directly connected with the balance arrangement. With directly connection in this application is meant that the first and second end of the balance arrangement are connected to the arm sections without being connected to the joint connecting the two arm sections. In a practical embodiment the two arm sections are connected directly to the first and second end of the tension construction.

Accordingly, there is no need to modify the joint connecting the two arms. The joint may be a technical simple joint having a first and a second joint part being interconnected with a rotation pin or shaft.

The first and second end of the tension construction is directly attached to the two arm sections. Hereby a first arm section will comprise a protruding part. This part is easy to attach to the first arm section. The attachment may be effected by screwing, welding, a gluing or other suitable means. Furthermore, it is also possible to provide a protruding part as an integral part of the first arm section.

What is important for the protruding part is that it is arranged in a plane perpendicular to the axis of rotation for the joint connecting the two arm sections. Hereby the mutual rotation of the two arm sections is possible. The protruding part will be arranged in a position outside the region where the first joint is arranged. The protruding part will comprise a first fixture means which is intended for cooperation with the attachment means of the first end of the tension construction. The position of the first fixture may be arranged in a position corresponding to the axis of rotation for the joint which corresponds to the fixture means arranged on the protruding part of the prior art construction. Accordingly, the same benefit of the mutual rotation of the two arm sections may be obtained, however, in a much simpler construction which does not involve a modification of the joint.

The second arm section will also comprise a fixture means which is a second fixture means which is intended for cooperation with the attachment means provided at the second end of the attachment construction.

Such arrangement would more or less correspond to the attachment to the second arm section of the prior art construction.

The tension construction will normally comprise a piston cylinder mechanism which is used for dampening/balancing the mutual movement of the two arm sections.

With the above construction it is possible to provide the first and second fixture means in a position which allows the relative movement of the two sections through an angle in the interval between 25° and 180°. This angle is measured between a longitudinal axis for each of the two arm sections.

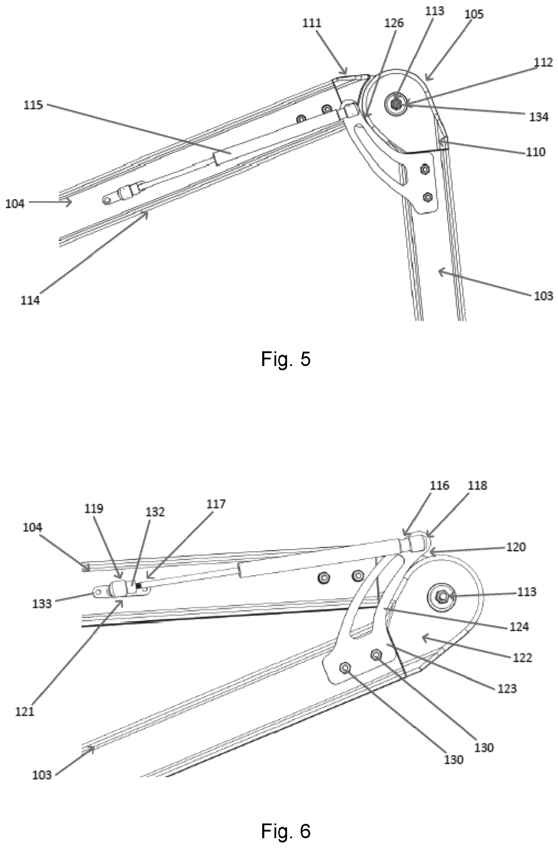

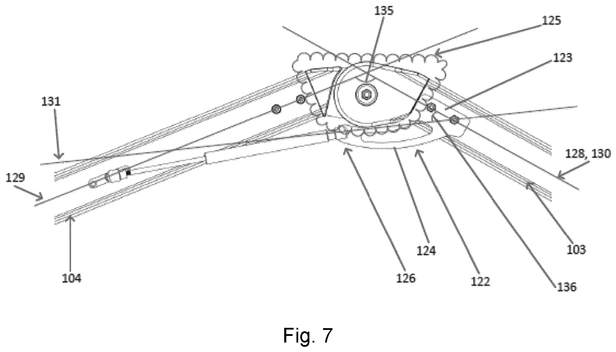

Accordingly, it is possible for the construction to provide the two arm sections in a position lying close to each other (illustrated in Fig. 6) to a position where the two arm sections are perpendicular to each other (illustrated in Fig. 5) to a position where the two arm sections are arranged in extension of each other (illustrated in Fig. 7) where the mutual angle would almost be 180°.

In practise it will also be possible to obtain a mutual angle which is slightly more than 180°. However, normally, there will not be a need for a mutual angle between the two arm sections beyond the position where they are arranged in extension of each other with the longitudinal axis substantial in extension to each other and forming a mutual angle of 180°. In this situation the two arm sections of the support structure will have its maximum length.

The interval of the angle will ensure a stable function of the balance arrangement.

According to a further embodiment, the support arrangement according to the invention is peculiar in that the protruding part is provided by a plate having a first plate part connected to a side face of the first arm section and a second plate part extending outwardly and in direction of the longitudinal axis of the first arm section in a plane perpendicular to the axis of rotation, which second plate part provide the protruding part.

In an especially simple construction, the protruding part is provided in form of a plate-shaped member. This plate will have a first plate part being connected to a side face of the first arm section. Here it should be remembered that the arm section normally will have a rectangular tubular form, and accordingly, it is easy to attach the first part of the plate to a side face of the first arm in such a way that the plate is arranged perpendicular to the axis of rotation for the joint. The second plate part will extend outwardly from the first arm section and in direction of the longitudinal axis of the first arm section and being arranged in the plane perpendicular to the axis of rotation. Hereby the protruding part is provided by the second plate part in a technical simple manner without interfering with the joint connecting the two arm sections.

According to a further embodiment, the support arrangement according to the invention is peculiar in that the second plate part is provided with an angle in an interval between 25 and 45° as measured between a longitudinal axis of the first arm section and a longitudinal axis of the second plate part.

With an angle having such size, it is possible that the second plate part will be provided in a position outside the joint and make it possible to provide the first fixture means in a position allowing the two arm sections to rotate through a mutual angle in the interval between 25° and 180°.

According to a further embodiment, the support arrangement according to the invention is peculiar in that the protruding part has an extension so the first fixture means are arranged in a position beyond the end of the first arm section and which position is arranged next to the joint region between the two arm sections where the first joint is arranged.

As it occurs from the above, it is the intention to have the fixture means arranged in a position outside the joint region. With joint region is meant the area between the two arm sections when they are arranged in extension of each other. Accordingly, the fixture means would be arranged in a position which is beyond the end of the first arm section. Preferably, this position is also arranged close to the joint region which is the region being delimited of the extension of the side faces of the arm sections being connected with the joint.

Accordingly, the extension of the protruding part is limited and will be a relatively compact construction.

According to a further embodiment, the support arrangement according to the invention is peculiar in that the protruding part has an extension so that the first fixture means are arranged in a position closer to the second arm section to which the first fixture means are not connected than to the first arm section as seen relative to the axis of rotation.

In a specific form it is preferred that the protruding part has such extension that the first fixture means arranged on the protruding part will be in a position closer to the second arm than to the first arm. This position is seen in relation to the axis of rotation.

In other words, one could say that the first fixture means will be arranged in a position pass the axis of rotation when the two arm sections are arranged in direct extension of each other.

According to a further embodiment, the support arrangement according to the invention is peculiar in that the fixture means and the attachment means are provided as elements which allow a mutual rotation.

The fixture means and the attachment means will be provided in such a way that the mutual rotation will be unhindered. The elements could both be rotatable, however, what is important is that there is a mutual possibility of rotation between the fixture means and the attachment means.

According to a further embodiment, the support arrangement according to the invention is peculiar in that each of the fixture means comprise a rotation pin and each of the attachment means comprise a bearing or vice versa.

In a simple form the fixture means may be provided in form of a rotation pin and the attachment means may be provided in form of a bearing. The construction could also be the other way around in such a way that the bearings are arranged on the arm sections and the rotation pin is a part of the tension construction.

According to a further embodiment, the support arrangement according to the invention is peculiar in that the fixture means are screwed onto a side of the first and second arm section respectively with screws, which preferably also are used to attach at least one of the joint parts of the first joint to the first arm section.

Seeing that the arm sections would be hollow sections, it is possible to screw the fixture means into the side of the first and second arm with screws. Also, other attachment means are possible to use.

In the same way the joint parts would be connected to the arm sections with screws screwed through the side walls of the arm sections and into a part of the joint extending into the hollow interior of the arm sections.

At least the joint part of the first part may be attached with the screws which are also used to attach the plate in which the protruding parts are provided.

According to a further embodiment, the support arrangement according to the invention is peculiar in that the tension construction is a cylinder-piston unit.

The tension construction will in an especially simple way be a cylinder-piston unit which is known from the prior art. Such unit will have a dampening function which could provide a stable mutual position of the two arms. Accordingly, the balance arrangement will be dimensioned according to the weight of the arm construction and the elements which are attached to the support construction.

According to a further embodiment, the support arrangement according to the invention is peculiar in that the shaft of the first joint comprises a screw which passes through the first joint part and the second joint part and is fixed by a bolt.

It is possible to provide the shaft for the first joint in different embodiments. It may be provided as a pin or other elements. However, it is an especially simple construction to provide a screw and to fix the screw with a bolt in a position maintaining the two joint parts in a mutual position allowing for the mutual rotation.

### Description of the Drawing

In the following, embodiments of the present invention will be further explained with reference to the accompanying drawing, in which
- Fig. 1: is a perspective view which shows a prior art support arrangement comprising two arm sections connected with a joint and for use in a ventilation system,
- Fig. 2: is a perspective partial view of the support arrangement illustrated in Fig. 1 illustrating the joint between the two arm sections,
- Fig. 3: is a partial view corresponding to Fig. 2, however as seen in a side view,
- Fig. 4: is a perspective view corresponding to Fig. 1 and which shows a support arrangement according to the present invention comprising two arm sections connected with a first joint and for use in a ventilation system,
- Fig. 5: is a perspective partial view of the support arrangement illustrated in Fig. 4 illustrating the two arm sections arranged in a first mutual position,
- Fig. 6: is a perspective partial view corresponding to Fig. 5 illustrating the two arm sections arranged in a second mutual position, and
- Fig. 7: is a perspective partial view corresponding to Fig. 5 illustrating the two arm sections arranged in a third mutual position.

### Detailed Description of the Invention

Figs. 1-3 show the support arrangement of the type disclosed in WO2011/115558. This arrangement has been explained above.

Figs. 4-7 show the support arrangement according to the present invention.

Identical or corresponding element in different Figures will be denoted with same reference numeral and will not be explained in connection with each figure.

Fig. 4 illustrates a support arrangement 101 intended to hold and control an air channel 102. The support arrangement 101 is arranged along the outer surface of the air channel 102.

The support arrangement comprises an arm construction consisting of two arm sections, namely a first arm section 103 and a second arm section 104. The two arm sections are connected through a first joint 105. The support arrangement is connected with a fixed support 106, e.g. mounted on a wall, through a second joint 107.

The use of the first and second joint 105, 107 makes it possible to obtain different positioning, bending and stretching of the arm construction.

Each arm section 103, 104 comprises a hollow rectangular aluminium profile 108 and 109.

Figs. 5-7 illustrate a detailed view of the two arm sections 103, 104 being connected with the first joint 105.

The first joint 105 comprises a first joint part 110 being connected with the first arm section 103 and a second joint part 111 being connected with the second arm part 104. The joint parts 110, 111 are connected through a shaft 112 passing through the first and second joint parts and making it possible to rotate around an axis of rotation 113 (being perpendicular to the plane of the paper).

The system also comprises a balance arrangement 114 consisting of a cylinder-piston unit forming a tension construction 115. The tension construction has a first end 116 and a second end 117.

The balance arrangement 114 is arranged between the first arm section 103 and the second arm section 104. The tension construction is provided with a first attachment means 118 and second attachment means 119 at each end of the tension construction 115.

The first attachment means 118 is intended to be connected with a first fixture means 120 provided on the first arm section 103. The first fixture means 120 is provided on a plate 122 connected with the first arm section 103. The plate 122 comprises a first plate part 123 and a second plate part 124.

The first plate part 123 is attached to the first arm section 103 with screws 127. The first plate part 123 is screwed to the side face of the first arm section 103 with screws 130 which are also used for attaching the first joint 105 to the first arm section 103.

The second plate part 124 is protruding from the first plate part 123 to form a protruding part 126 provided in a position outside a joint region 125 between the two arm sections 103, 104 where the first joint 105 is arranged.

The first fixture means 120 may be provided by a rotation pin (not visible) attached to the second plate part 124 at the protruding part 126.

The first arm section 103 has a longitudinal axis 128. The second arm section 104 has a longitudinal axis 129. The first plate part 123 has a longitudinal axis 130 which corresponds to the longitudinal axis 128 of the first arm section 103. The second plate part 124 has a longitudinal axis 131.

Between the longitudinal axis 131 of the second plate part 124 and the longitudinal axis 128 of the first arm section 103 an angle 136 is formed. The angle 136 will be in an interval between 20° and 45°.

The longitudinal axis 128 of the first arm section 103 and the longitudinal axis 129 of the second arm section 104 form a mutual angle 135. The angle 135 which indicates the possible mutual rotation of the two arm sections 103 and 104 will be in an interval between 25° and 180°.

The second attachment means 119 are intended to be attached to a second fixture means 121. The second fixture means 121 may also be provided by a rotation pin (not visible). The second fixture means 121 are attached to the second arm section 104 through a plate 132 which is connected to the second arm section 104 with screws 133.

The shaft 112 between the first and second joint parts 110 and 111 of the first j oint 105 is provided by a screw passing through the joint parts and being fixed by a bolt 134.

## Claims

1. A support arrangement (101), preferably for a ventilation system comprising an air channel (102) which is supported by the support arrangement, which support arrangement comprises:
- a arm construction comprising two arm sections, a first arm section (103) and a second arm section (104) arranged in extension of each other,
- a first joint (105) connecting said two arm sections (103, 104), wherein said first joint (105) comprises a first joint part (110) attached at the first arm section (103) and a second joint part (111) attached at the second arm section (104), where said joint parts are connected with each other through a shaft (112) passing through the first and second j oint part, and wherein the first and second j oint part can be rotated relative to each other around an axis of rotation (113) formed by said shaft (112),
- a second joint (107) connecting said support arrangement (101) with a fixed support (106), which second joint (107) holds and maintains a basic position of the support arrangement (101) so that different positioning of the support arrangement is possible,
- a balance arrangement (114) comprising a tension construction (115) having a first (116) and a second end (117),
and wherein
- each arm section (103, 104) comprises a hollow profile (108, 109) and wherein the first and second joint parts (110, 111) of said first joint (105) are mounted in said hollow profiles (108, 109),
**characterized in**
- **that** the balance arrangement (114) is arranged between the first (103) and second arm sections (104),
- **that** the tension construction (115) has a first and a second attachment means (118, 119) for attaching the first (116) and second end (117) of the tension construction (115) directly to the two arm sections (103, 104), and
- **that** the first arm section (103) comprises a protruding part (126) which is arranged in a plane perpendicular to the axis of rotation (113) and which protruding part protrudes from said first arm section (103) to a position outside a joint region (125) between the two arm sections (103, 104) where the first joint (105) is arranged,
- **that** a first fixture means (120) is arranged at the protruding part (126), which first fixture means (120) cooperate with the first attachment means (118) at the first end (116) of the tension construction (115),
- **that** the second arm section (104) comprises a second fixture means (121) cooperating with the second attachment means (119) at the second end (117) of the tension construction (115), and
- **that** the first and second fixture means (120, 121) allow a relative rotation of the arm sections (103, 104) in an angle (135) in an interval between 25° and 180° as measured between a longitudinal axis (128, 129) of the two arm sections (103, 104).

2. The support arrangement according to claim 1, **characterized in that** the protruding part (126) is provided by a plate (122) having a first plate part (123) connected to a side face of the first arm section (103) and a second plate part (124) extending outwardly and in direction of the longitudinal axis (128) of the first arm section (103) in a plane perpendicular to the axis of rotation (113) , which second plate part (124) provide the protruding part (126).

3. The support arrangement according to claim 2, **characterized in that** the second plate part (124) is provided with an angle (136) in an interval between 20° and 45° as measured between a longitudinal axis (128) of the first arm section (103) and a longitudinal axis (131) of the second plate part (124).

4. The support arrangement according to any one of the preceding claims, **characterized in that** the protruding part (126) has an extension so the first fixture means (120) are arranged in a position beyond the end of the first arm section (103) and which position is arranged next to the joint region (125) between the two arm sections where the first joint (105) is arranged.

5. The support arrangement according to any one of the preceding claims, **characterized in that** the protruding part (126) has an extension so that the first fixture means (120) are arranged in a position closer to the second arm section (104), to which the first fixture means (120) are not connected, than to the first arm section (103) as seen relative to the axis of rotation (113).

6. The support arrangement according to any one of the preceding claims, **characterized in that** the fixture means (120, 121) and the attachment means (118, 119) are provided as elements which allow a mutual rotation.

7. The support arrangement according to claim 6, **characterized in that** each of the fixture means (120, 121) comprise a rotation pin and each of the attachment means (118, 119) comprise a bearing or vice versa.

8. The support arrangement according to any one of the preceding claims, **characterized in that** the fixture means (120, 121) are screwed onto a side of the first and second arm section (103, 104) respectively with screws (127, 130), which preferably also are used to attach at least one of the joint parts (110, 111) of the first joint (105) to the first arm section (103).

9. The support arrangement according to any one of the preceding claims, **characterized in that** the tension construction (115) is a cylinder-piston unit.

10. The support arrangement according to any one of the preceding claims, **characterized in that** the shaft (112) of the first joint (105) comprises a screw which passes through the first joint part (110) and the second joint part (111) and is fixed by a bolt (134).

## Patentansprüche

1. Trägeranordnung (101), vorzugsweise für ein Belüftungssystem, das einen Luftkanal (102) umfasst, der von der Trägeranordnung getragen ist, wobei die Trägeranordnung Folgendes umfasst:
- eine Armkonstruktion, die zwei Armabschnitte, einen ersten Armabschnitt (103) und einen zweiten Armabschnitt (104), die in Verlängerung zueinander angeordnet sind, umfasst,
- ein erstes Gelenk (105), das die zwei Armabschnitte (103, 104) verbindet, wobei das erste Gelenk (105) ein erstes Gelenkteil (110), das an dem ersten Armabschnitt (103) angebracht ist, und ein zweites Gelenkteil (111), das an dem zweiten Armabschnitt (104) angebracht ist, umfasst, wobei die Gelenkteile durch eine Welle (112), die durch das erste und zweiten Gelenkteil passiert, miteinander verbunden sind und wobei das erste und zweite Gelenkteil um eine durch die Welle (112) gebildete Drehachse (113) relativ zueinander gedreht werden können,
- ein zweites Gelenk (107), das die Trägeranordnung (101) mit einem festen Träger (106) verbindet, wobei das zweite Gelenk (107) eine Grundposition der Trägeranordnung (101) hält und aufrechterhält, so dass eine unterschiedliche Positionierung der Trägeranordnung möglich ist,
- eine Ausgleichsanordnung (114), die eine Spannkonstruktion (115) umfasst, die ein erstes (116) und ein zweites Ende (117) aufweist,
und wobei
- jeder Armabschnitt (103, 104) ein Hohlprofil (108, 109) umfasst und wobei das erste und zweite Gelenkteil (110, 111) des ersten Gelenks (105) in den Hohlprofilen (108, 109) montiert sind,
**dadurch gekennzeichnet,**
- **dass** die Ausgleichsanordnung (114) zwischen dem ersten (103) und zweiten Armabschnitt (104) angeordnet ist,
**dass** die Spannkonstruktion (115) ein erstes und ein zweites Anbringungsmittel (118, 119) zum Anbringen des ersten (116) und zweiten Endes (117) der Spannkonstruktion (115) direkt an den beiden Armabschnitten (103, 104) aufweist und
- **dass** der erste Armabschnitt (103) einen herausragenden Teil (126) umfasst, der in einer Ebene senkrecht zu der Drehachse (113) angeordnet ist und wobei der herausragende Teil von dem ersten Armabschnitt (103) zu einer Position außerhalb eines Gelenkbereichs (125) zwischen den beiden Armabschnitten (103, 104) herausragt, wo das erste Gelenk (105) angeordnet ist,
- **dass** ein erstes Befestigungsmittel (120) an dem herausragenden Teil (126) angeordnet ist, wobei das erste Befestigungsmittel (120) mit dem ersten Anbringungsmittel (118) an dem ersten Ende (116) der Spannkonstruktion (115) zusammenwirkt,
- **dass** der zweite Armabschnitt (104) ein zweites Befestigungsmittel (121) umfasst, das mit dem zweiten Anbringungsmittel (119) an dem zweiten Ende (117) der Spannkonstruktion (115) zusammenwirkt, und
- **dass** das erste und zweite Befestigungsmittel (120, 121) eine relative Drehung der Armabschnitte (103, 104) in einem Winkel (135) in einem Intervall zwischen 25° und 180°, gemessen zwischen einer Längsachse (128, 129) der beiden Armabschnitte (103, 104), ermöglichen.

2. Trägeranordnung nach Anspruch 1, **dadurch gekennzeichnet, dass** der herausragende Teil (126) von einer Platte (122) bereitgestellt ist, die einen ersten Plattenteil (123), der mit einer Seitenfläche des ersten Armabschnitts (103) verbunden ist, und einen zweiten Plattenteil (124) aufweist, der sich nach außen und in Richtung der Längsachse (128) des ersten Armabschnitts (103) in einer Ebene senkrecht zu der Drehachse (113) erstreckt, wobei der zweite Plattenteil (124) den herausragenden Teil (126) bereitstellt.

3. Trägeranordnung nach Anspruch 2, **dadurch gekennzeichnet, dass** der zweite Plattenteil (124) mit einem Winkel (136) in einem Intervall zwischen 20° und 45°, gemessen zwischen einer Längsachse (128) des ersten Armabschnitts (103) und einer Längsachse (131) des zweiten Plattenteils (124), bereitgestellt ist.

4. Trägeranordnung nach einem der vorhergehenden Ansprüche, **dadurch gekennzeichnet, dass** der herausragende Teil (126) eine Verlängerung aufweist, so dass das erste Befestigungsmittel (120) in einer Position jenseits des Endes des ersten Armabschnitts (103) angeordnet ist und wobei die Position neben dem Gelenkbereich (125) zwischen den beiden Armabschnitten angeordnet ist, wo das erste Gelenk (105) angeordnet ist.

5. Trägeranordnung nach einem der vorhergehenden Ansprüche, **dadurch gekennzeichnet, dass** der herausragende Teil (126) eine Verlängerung aufweist, so dass das erste Befestigungsmittel (120) in einer Position angeordnet ist, die relativ zu der Drehachse (113) gesehen näher an dem zweiten Armabschnitt (104) ist, mit dem das erste Befestigungsmittel (120) nicht verbunden ist, als an dem ersten Armabschnitt (103).

6. Trägeranordnung nach einem der vorhergehenden Ansprüche, **dadurch gekennzeichnet, dass** die Befestigungsmittel (120, 121) und die Anbringungsmittel (118, 119) als Elemente bereitgestellt sind, die eine gegenseitige Drehung ermöglichen.

7. Trägeranordnung nach Anspruch 6, **dadurch gekennzeichnet, dass** jedes der Befestigungsmittel (120, 121) einen Drehstift umfasst und jedes der Anbringungsmittel (118, 119) ein Lager umfasst oder umgekehrt.

8. Trägeranordnung nach einem der vorhergehenden Ansprüche, **dadurch gekennzeichnet, dass** die Befestigungsmittel (120, 121) jeweils mit Schrauben (127, 130), die vorzugsweise auch zum Anbringen mindestens eines der Gelenkteile (110, 111) des ersten Gelenks (105) an dem ersten Armabschnitt (103) verwendet sind, auf eine Seite des ersten und zweiten Armabschnitts (103, 104) geschraubt sind.

9. Trägeranordnung nach einem der vorhergehenden Ansprüche, **dadurch gekennzeichnet, dass** die Spannkonstruktion (115) eine Zylinder-Kolben-Einheit ist.

10. Trägeranordnung nach einem der vorhergehenden Ansprüche, **dadurch gekennzeichnet, dass** die Welle (112) des ersten Gelenks (105) eine Schraube umfasst, die durch das erste Gelenkteil (110) und das zweite Gelenkteil (111) passiert und durch einen Bolzen (134) befestigt ist.

## Revendications

1. Agencement de support (101), de préférence pour un système de ventilation comprenant un canal d'air (102) qui est supporté par l'agencement de support, lequel agencement de support comprend :
- une construction de bras comprenant deux sections de bras, une première section de bras (103) et une seconde section de bras (104) disposées dans le prolongement l'une de l'autre,
- une première articulation (105) reliant lesdites deux sections de bras (103, 104), dans lequel ladite première articulation (105) comprend une première partie d'articulation (110) fixée à la première section de bras (103) et une seconde partie d'articulation (111) fixée à la seconde section de bras (104), où lesdites parties d'articulation sont reliées entre elles par un arbre (112) traversant les première et seconde parties d'articulation, et dans lequel les première et seconde parties d'articulation peuvent tourner l'une par rapport à l'autre autour d'un axe de rotation (113) formé par ledit arbre (112),
- une seconde articulation (107) reliant ledit agencement de support (101) à un support fixe (106), laquelle seconde articulation (107) tient et maintient une position de base de l'agencement de support (101) de sorte qu'un positionnement différent de l'agencement de support est possible,
- un agencement d'équilibrage (114) comprenant une construction de tension (115) ayant une première (116) et une seconde extrémité (117),
et dans lequel
- chaque section de bras (103, 104) comprend un profil creux (108, 109) et dans lequel les première et seconde parties d'articulation (110, 111) de ladite première articulation (105) sont montées dans lesdits profils creux (108, 109),
**caractérisé en ce**
- **que** le dispositif d'équilibrage (114) est disposé entre les première (103) et seconde sections de bras (104),
**que** la construction de tension (115) comporte des premier et second moyens de fixation (118, 119) pour fixer la première (116) et la seconde extrémité (117) de la construction de tension (115) directement aux deux sections de bras (103, 104), et
- **que** la première section de bras (103) comprend une partie saillante (126) qui est disposée dans un plan perpendiculaire à l'axe de rotation (113) et laquelle partie saillante fait saillie de ladite première section de bras (103) jusqu'à une position à l'extérieur d'une région d'articulation (125) entre les deux sections de bras (103, 104) où est disposée la première articulation (105),
- **qu'**un premier moyen de fixation (120) est disposé au niveau de la partie saillante (126), lequel premier moyen de fixation (120) coopère avec le premier moyen de fixation (118) au niveau de la première extrémité (116) de la construction de tension (115),
- **que** la seconde section de bras (104) comprend un second moyen de fixation (121) coopérant avec le second moyen de fixation (119) au niveau de la seconde extrémité (117) de la construction de tension (115), et
- **que** les premier et second moyens de fixation (120, 121) permettent une rotation relative des sections de bras (103, 104) selon un angle (135) compris entre 25° et 180° tel que mesuré entre un axe longitudinal (128, 129) des deux sections de bras (103, 104).

2. Agencement de support selon la revendication 1, **caractérisé en ce que** la partie saillante (126) est constituée d'une plaque (122) comportant une première partie de plaque (123) reliée à une face latérale de la première section de bras (103) et une seconde partie de plaque (124) se prolongeant vers l'extérieur et en direction de l'axe longitudinal (128) de la première section de bras (103) dans un plan perpendiculaire à l'axe de rotation (113), laquelle seconde partie de plaque (124) constitue la partie saillante (126).

3. Agencement de support selon la revendication 2, **caractérisé en ce que** la seconde partie de plaque (124) présente un angle (136) dans un intervalle compris entre 20° et 45°, tel que mesuré entre un axe longitudinal (128) de la première section de bras (103) et un axe longitudinal (131) de la seconde partie de plaque (124).

4. Agencement de support selon l'une quelconque des revendications précédentes, **caractérisé en ce que** la partie saillante (126) présente un prolongement de sorte que le premier moyen de fixation (120) est disposé dans une position au-delà de l'extrémité de la première section de bras (103) et laquelle position est disposée à côté de la région d'articulation (125) entre les deux sections de bras où la première articulation (105) est disposée.

5. Agencement de support selon l'une quelconque des revendications précédentes, **caractérisé en ce que** la partie saillante (126) présente un prolongement de telle sorte que le premier moyen de fixation (120) est disposé dans une position plus proche de la seconde section de bras (104), à laquelle le premier moyen de fixation (120) n'est pas relié, que de la première section de bras (103) vue par rapport à l'axe de rotation (113).

6. Agencement de support selon l'une quelconque des revendications précédentes, **caractérisé en ce que** les moyens de fixation (120, 121) et les moyens de fixation (118, 119) sont prévus sous forme d'éléments permettant une rotation mutuelle.

7. Agencement de support selon la revendication 6, **caractérisé en ce que** chacun des moyens de fixation (120, 121) comprend une broche de rotation et chacun des moyens de fixation (118, 119) comprend un palier ou vice versa.

8. Agencement de support selon l'une quelconque des revendications précédentes, **caractérisé en ce que** les moyens de fixation (120, 121) sont vissés sur un côté de la première et de la seconde section de bras (103, 104) respectivement à l'aide de vis (127, 130), qui sont de préférence également utilisées pour fixer au moins une des parties d'articulation (110, 111) de la première articulation (105) à la première section de bras (103).

9. Agencement de support selon l'une quelconque des revendications précédentes, **caractérisé en ce que** la construction de tension (115) est une unité cylindre-piston.

10. Agencement de support selon l'une quelconque des revendications précédentes, **caractérisé en ce que** l'arbre (112) de la première articulation (105) comprend une vis qui traverse la première partie d'articulation (110) et la seconde partie d'articulation (111) et est fixée par un boulon (134).
